(19) Europäisches Patentamt
European Patent Office
Office européen des brevets

(11) **EP 4 580 133 A1**

(12) **EUROPEAN PATENT APPLICATION**
published in accordance with Art. 153(4) EPC

(43) Date of publication:
02.07.2025 Bulletin 2025/27

(51) International Patent Classification (IPC):
*H04L 25/03* (2006.01)

(21) Application number: 23867553.2

(52) Cooperative Patent Classification (CPC):
H04L 25/03

(22) Date of filing: 20.09.2023

(86) International application number:
PCT/CN2023/120012

(87) International publication number:
WO 2024/061266 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.09.2022 CN 202211161260

(71) Applicant: ZTE CORPORATION
Shenzhen, Guangdong 518057 (CN)

(72) Inventors:
• ZHONG, Yiming
  Shenzhen, Guangdong 518057 (CN)
• LI, Yunpeng
  Shenzhen, Guangdong 518057 (CN)

(74) Representative: Canzler & Bergmeier
Patentanwälte
Partnerschaft mbB
Despag-Straße 6
85055 Ingolstadt (DE)

(54) **IMPLEMENTATION METHOD OF MLSE EQUALIZER, CHIP, ELECTRONIC DEVICE, AND COMPUTER READABLE MEDIUM**

(57)     The present application provides an implementation method of a maximum likelihood sequence estimation (MLSE) equalizer, a chip, an electronic device, and a computer readable medium. The implementation method of the MLSE equalizer comprises: according to an optimal path of a (k-1)th symbol, determining a first path corresponding to a kth symbol and needing to calculate a branch path metric value, wherein k is an integer greater than or equal to 2; calculating the branch path metric value of the kth symbol under the first path; determining an optimal path of the kth symbol and an optimal accumulation path distance of the kth symbol under the optimal path of the kth symbol according to the branch path metric value of the kth symbol under the first path and an optimal accumulation path distance of the (k-1)th symbol under the optimal path of the (k-1)th symbol; and storing the optimal path of the kth symbol and the optimal accumulation path distance of the kth symbol under the optimal path of the kth symbol.

```
                                                            200
┌──────────────────────────────────────────┐
│ Determine, according to an optimal path   │
│ of a (k-1)th symbol, a first path         │
│ corresponding to a kth symbol and having  │
│ a branch path metric value to be          │
│ calculated, where k is an integer greater │
│ than or equal to 2                        │
└──────────────────────────────────────────┘
                     │
                     ▼                        201
┌──────────────────────────────────────────┐
│ Calculate the branch path metric value    │
│ of the kth symbol under the first path    │
└──────────────────────────────────────────┘
                     │
                     ▼                        202
┌──────────────────────────────────────────┐
│ Determine, according to the branch path   │
│ metric value of the kth symbol under the  │
│ first path and an optimal accumulated     │
│ path distance of the (k-1)th symbol under │
│ the optimal path of the (k-1)th symbol,   │
│ an optimal path of the kth symbol and an  │
│ optimal accumulated path distance of the  │
│ kth symbol under the optimal path of the  │
│ kth symbol                                │
└──────────────────────────────────────────┘
                     │
                     ▼                        203
┌──────────────────────────────────────────┐
│ Store the optimal path of the kth symbol  │
│ and the optimal accumulated path distance │
│ of the kth symbol under the optimal path  │
│ of the kth symbol                         │
└──────────────────────────────────────────┘
```

FIG.2

**Description**

CROSS-REFERENCE TO RELATED APPLICATIONS

This application claims priority to Chinese patent application No. 202211161260.8 filed with CNIPA on September 22, 2022, which is incorporated by reference hereby in its entirety.

TECHNICAL FIELD

The present application relates to, but is not limited to, the technical field of information processing.

BACKGROUND

With the increasing demand for communication performance and communication rate, the bandwidth and the communication channels of communication equipment and devices have a more and more important influence on digital communication, where the main factors of the influence include the more and more serious intersymbol interference (ISI), noise interference, attenuation of signal power, and so on. Therefore, in the presence of these multiple distortion sources, the equalization technique for signal compensation has become an integral part of almost all communication systems.

The maximum likelihood sequence estimation (MLSE) equalizer is one of the equalizers with excellent performance, and can effectively compensate for non-linearity and signal power of a signal on a receiving side. It has been proved by related simulation experiments and papers that compared with a decision feedback equalizer (DFE), the MLSE equalizer can achieve better effects in terms of signal non-linearity and medium and high frequency component compensation, but consumes much more resources of a chip, such as memory resources, computing resources and other resources, than the DFE equalizer due to a different algorithm principle and architecture. Especially for an MLSE equalizer with multiple tap coefficients, the number of tap coefficients, the computation depth and the complexity of the algorithm implementation are in direct proportion to the consumption of the resources of the chip, such as the memory resources, the computing resources and other resources. For example, each time one tap coefficient is increased in the MLSE equalizer, the numbers of branch metric sub-modules, add-compare-select (ACS) sub-modules and path management sub-modules will be doubled. Therefore, when an MLSE algorithm with better performance and more tap coefficients is used, the requirements of the MLSE equalizer on resources for data storage, computation and the like are also exponentially increased, which poses a great challenge to chips with limited resources, such as area, power consumption, computing resources and the like.

SUMMARY

The present application provides a method and a chip for implementing an MLSE equalizer, an electronic device, and a computer readable medium.

In a first aspect, the present application provides a method for implementing an MLSE equalizer, including: determining, according to an optimal path of a $(k-1)^{th}$ symbol, a first path corresponding to a $k^{th}$ symbol and having a branch path metric value to be calculated, where k is an integer greater than or equal to 2; calculating the branch path metric value of the $k^{th}$ symbol under the first path; determining, according to the branch path metric value of the $k^{th}$ symbol under the first path and an optimal accumulated path distance of the $(k-1)^{th}$ symbol under the optimal path of the $(k-1)^{th}$ symbol, an optimal path of the $k^{th}$ symbol and an optimal accumulated path distance of the $k^{th}$ symbol under the optimal path of the $k^{th}$ symbol; and storing the optimal path of the $k^{th}$ symbol and the optimal accumulated path distance of the $k^{th}$ symbol under the optimal path of the $k^{th}$ symbol.

In a second aspect, the present application further provides an electronic device, including: at least one processor; and a memory having at least one program stored thereon which, when executed by the at least one processor, causes any one of the methods for implementing an MLSE equalizer described herein to be implemented.

In a third aspect, the present application further provides a computer-readable medium having a computer program stored thereon which, when executed by a processor, causes any one of the methods for implementing an MLSE equalizer described herein to be implemented.

In a fourth aspect, the present application provides a chip for implementing a maximum likelihood sequence estimation equalizer, including: a data interface and a processing circuit, wherein the processing circuit is configured to read an instruction stored on a peripheral control circuit through the data interface, and perform any one of the methods for implementing a maximum likelihood sequence estimation equalizer described herein.

BRIEF DESCRIPTION OF DRAWINGS

FIG. 1 is a schematic diagram showing an implementation of an MLSE equalizer in the existing art;
FIG. 2 is a flowchart of a method for implementing an MLSE equalizer according to the present application;
FIG. 3 is a block diagram of a chip for implementing an MLSE equalizer according to the present application; and
FIG. 4 is a block diagram of a processing circuit according to the present application.

DETAIL DESCRIPTION OF EMBODIMENTS

To improve understanding of the technical solutions of the present application for those skilled in the art, the method and chip for implementing an MLSE equalizer, the electronic device, and the computer readable medium according to the present application will be described below in detail in conjunction with the accompanying drawings.

Example implementations will be described more sufficiently below with reference to the accompanying drawings, but which may be embodied in different forms and should not be construed as limited to the implementations set forth herein. Rather, these implementations are provided so that the present application will be thorough and complete, and will fully convey the scope of the present application to those skilled in the art.

Implementations of the present application and features thereof may be combined with each other without conflict.

As used herein, the term "and/or" includes any and all combinations of at least one associated listed item.

The terminology used herein is for the purpose of describing specific implementations only and is not intended to limit the present application. As used herein, the singular forms "a", "an" and "the" are intended to include the plural forms as well, unless the context clearly indicates otherwise. It will be further understood that as used herein, the terms "comprise" and/or "consist of ..." specify the presence of the stated features, integers, steps, operations, elements, and/or components, but do not preclude the presence or addition of at least one other feature, integer, step, operation, element, component, and/or group thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the existing art and the present application, and will not be interpreted in an idealized or overly formal sense unless expressly so defined herein.

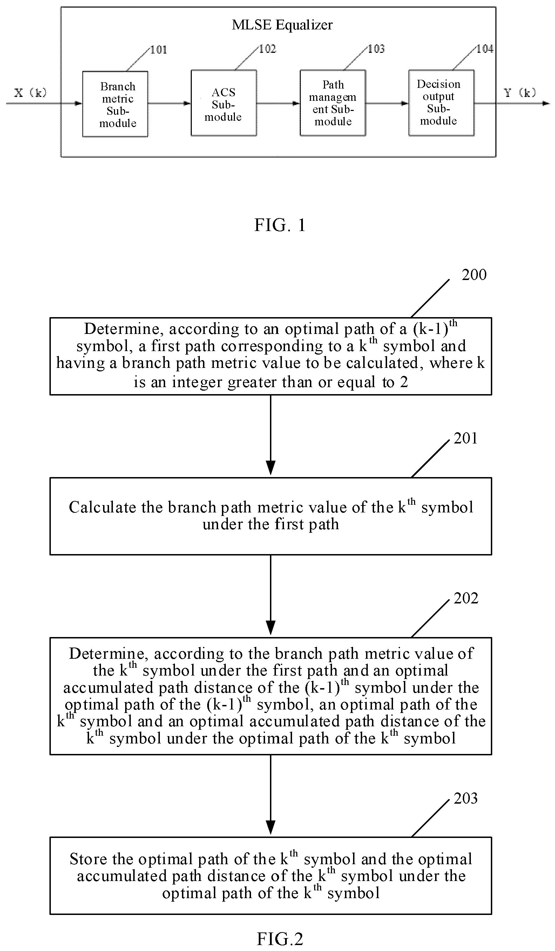

FIG. 1 is a schematic diagram showing an implementation of an MLSE equalizer in the existing art. As shown in FIG. 1, an MLSE equalizer includes four sub-modules, i.e., a branch metric sub-module 101, an add-compare-select sub-module 102, a path management sub-module 103, and a decision output sub-module 104.

In FIG. 1, X(k) is a signal to be equalized input to the MLSE equalizer, and Y(k) is a level signal decoded and output from the MLSE equalizer after decision.

The branch metric sub-module 101 is configured to calculate branch path metric values of a $k^{th}$ symbol under different paths. Generally, the branch path metric value is represented by a distance between sequential sampling points. The distance may be any one of a Euclidean distance, a Manhattan distance, a Chebyshev distance, or the like. For example, in the case of the Euclidean distance, the branch path metric value is calculated by:

$$P\left(x_{k-(n-1)}, \quad x_{k-(n-2)}, \cdots, \quad x_k\right) = \left| x(k) - \left( \sum_{i=0}^{n-1} \alpha_i x_{k-i} \right) \right|^2 \tag{1}$$

where $x_{k-i}$ is a possible output level of a standard constellation point corresponding to an $(k-i)^{th}$ symbol, and taking non-return-to-zero (NRZ) modulation as an example, each symbol has two possible output levels, that is, +1 and -1 respectively; $x(k)$ is an $k^{th}$ symbol of a currently input signal to be equalized, n is the number of tap coefficients in an MLSE, and $\alpha_i$ is a symbol interference coefficient, i.e., a tap coefficient.

In the existing art, each symbol has m possible output levels, and $m^n$ branch metric values are included in equation (1). If one branch metric value is calculated by one branch metric sub-module 101, then $m^n$ branch metric sub-modules 101 are desired. Taking NRZ modulation as an example, each symbol has 2 possible output levels, and when n=3, 8 branch metric values are included in equation (1), and the possible output levels corresponding to $(x_{k-2}, x_{k-1}, x_k)$ are: (-1, -1, -1), (+1, -1, -1), (-1, +1, -1), (+1, +1, - 1), (-1, -1, +1), (+1, -1, +1), (-1, +1, +1), and (+1, +1, +1), which requires 8 branch metric sub-modules 101.

The add-compare-select sub-module 102 is configured to accumulate, according to the branch path metric values of the $k^{th}$ symbol under different paths output from the branch metric sub-module 101, an optimal accumulated path distance of a previous symbol under paths corresponding to the branch path metric values, and then select an optimal path (i.e., a survivor path) of a current symbol.

Taking the Euclidean distance as an example, the optimal accumulated path distance of the $k^{th}$ symbol under a path $x_{k-(n-2)}x_{k-(n-3)} \cdots x_k$ is calculated by:

$$D\left(x_{k-(n-2)}, \quad x_{k-(n-3)}, \cdots, \quad x_k\right) = \min \left\{ \begin{array}{l} D\left(x_{k-(n-1)}, \quad x_{k-(n-2)}, \cdots, \quad x_{k-1}\right) \\ +P\left(x_{k-(n-1)}, \quad x_{k-(n-2)}, \cdots, \quad x_k\right) \end{array} \right\} \quad (2)$$

where $D(x_{k-(n-2)}, x_{k-(n-3)}, \cdots, x_k)$ is the optimal accumulated path distance of the $k^{th}$ symbol under the path $x_{k-(n-2)}x_{k-(n-3)} \cdots x_k$, $D(x_{k-(n-1)}, x_{k-(n-2)}, \cdots, x_{k-1})$ is the optimal accumulated path distance of the $(k-1)^{th}$ symbol under a path $x_{k-(n-1)}x_{k-(n-2)} \cdots x_{k-1}$, and $P(x_{k-(n-1)}, x_{k-(n-2)}, \cdots, x_k)$ is a branch path metric value of the $k^{th}$ symbol under a path $x_{k-(n-1)}x_{k-(n-2)} \cdots x_k$.

In the existing art, if one possible value of $D(x_{k-(n-2)}, x_{k-(n-3)}, \cdots, x_k)$ is calculated by one add-compare-select sub-module 102, then $m^{n-1}$ add-compare-select sub-modules 102 are desired. Taking NRZ modulation as an example, $2^{n-1}$ add-compare-select sub-modules 102 are desired.

The path management sub-module 103 is configured to store a survivor path node selected by the add-compare-select sub-module 102 and the optimal path values under different paths, and perform related operations of traceback and decoding subsequently to output a decoded decision value.

In the existing art, the number of optimal path values stored in the path management sub-module 103 is $m^{n-1}$.

The decision output sub-module 104 is configured to decide and output the decoded decision value under the survivor path to obtain a decided level signal.

FIG. 2 is a flowchart of a method for implementing an MLSE equalizer according to the present application.

In a first aspect, referring to FIG. 2, in an implementation of the present application, there is provided a method for implementing an MLSE equalizer, which includes the following operations 200 to 203.

At operation 200, determining, according to an optimal path of a $(k-1)^{th}$ symbol, a first path corresponding to a $k^{th}$ symbol and having a branch path metric value to be calculated, where k is an integer greater than or equal to 2.

In some exemplary implementations, the number of first paths is smaller than the number of second paths, and a value of each symbol in each second path includes m possible output levels, where m is an integer greater than or equal to 1. The number of first paths is smaller than the number of second paths, where the second paths are paths having branch path metric values to be calculated in the existing art. Therefore, the number of paths having branch path metric values to be calculated is reduced, so that the number of optimal paths to be determined and stored is also reduced, and the required computing resources and storage resources are saved.

In some exemplary implementations, a first target symbol in the first path takes the same value as a corresponding symbol in the optimal path of the $(k-1)^{th}$ symbol. The first target symbol includes the $(k-(n-1))^{th}$ to $(k-t)^{th}$ symbols, where n is the number of tap coefficients and is less than or equal to k, and t is an integer greater than or equal to 1 and less than or equal to n-2. A value of a second target symbol in the first path includes m possible output levels of a standard constellation point. The second target symbol includes the $(k-t+1)^{th}$ to $(k)^{th}$ symbols.

In other words, the first target symbol in the first path has only one value, while the second target symbol has m values.

In some exemplary implementations, the first target symbol includes: the $(k-(n-1))^{th}$ to $(k-1)^{th}$ symbols, and the second target symbol includes: the $k^{th}$ symbol, which is the same as the case when t takes value 1.

In some exemplary implementations, m is the number of possible output levels of each symbol corresponding to the modulation scheme of the signal to be equalized. For example, m takes value 2 for NRZ modulation.

The modulation scheme is not limited in the implementations of the present application. For example, any one of NRZ, quadrature amplitude modulation (QAM), phase shift keying (PSK), N level pulse amplitude modulation (PAM-N), or the like may be adopted.

Taking NRZ modulation as an example, each symbol has two possible output levels, i.e., -1 and +1.

If n is 3, then the $(k-1)^{th}$ symbol has two optimal paths $x_{k-3}x_{k-2}x_{k-1}$, and if the two optimal paths are (-1, -1, -1) and (-1, +1, +1) respectively, then it can be determined from these two optimal paths that the first path includes four paths: (-1, -1, -1), (-1, -1, +1), (+1, +1, -1), and (+1, +1, +1), which is the same as the above case when t takes value 1.

If n is 4, then the $(k-1)^{th}$ symbol has four optimal paths $x_{k-4}x_{k-3}x_{k-2}x_{k-1}$, and if the four optimal paths are (-1, -1, -1, -1), (+1, -1, -1, +1), (-1, +1, +1, +1), and (+1, +1, +1, -1) respectively, then it can be determined from these four optimal paths that the first path includes eight paths: (-1, -1, -1, -1), (-1, -1, -1, +1), (-1, -1, +1, +1), (-1, -1, +1, -1), (+1, +1, +1, +1), (+1, +1,

+1, -1), (+1, +1, -1, +1) and (+1, +1, -1, -1), which is the same as the case when t takes value 2.

At operation 201, calculating the branch path metric value of the $k^{th}$ symbol under the first path.

In some exemplary implementations, the branch path metric value of the $k^{th}$ symbol under the first path is calculated by equation (1).

At operation 202, determining, according to the branch path metric value of the $k^{th}$ symbol under the first path and an optimal accumulated path distance of the $(k-1)^{th}$ symbol under the optimal path of the $(k-1)^{th}$ symbol, an optimal path of the $k^{th}$ symbol and an optimal accumulated path distance of the $k^{th}$ symbol under the optimal path of the $k^{th}$ symbol.

In some exemplary implementations, determining, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol includes: grouping the first paths, where paths in the same group include paths having the same values from the $(k-t+1)^{th}$ to $k^{th}$ symbols among the first paths; for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, where the path selected from the optimal paths of the $(k-1)^{th}$ symbol includes: a path of the optimal paths of the $(k-1)^{th}$ symbol having the same values from the $(k-t+1)^{th}$ to $(k-1)^{th}$ symbols as the paths in the group; forming the optimal path of the $k^{th}$ symbol from optimal paths corresponding to all groups; and forming the optimal accumulated path distance of the $k^{th}$ symbol under the optimal path of the $k^{th}$ symbol from optimal accumulated path distances corresponding to all groups.

In some exemplary implementations, assuming that the first path is $x_{k-(n-1)}x_{k-(n-2)} \cdots x_{k-t}x_{k-t+1} \cdots x_{k-1}x_k$, and the optimal path of the $(k-1)^{th}$ symbol is $x_{k-1-(n-1)}x_{k-1-(n-2)} \cdots x_{k-1-t}x_{k-t} \cdots x_{k-1}$, then the part $x_{k-(n-1)}x_{k-(n-2)} \cdots x_{k-t}$ in each first path belonging to the same group is the same as the part $x_{k-(n-1)}x_{k-(n-2)} \cdots x_{k-t}$ in the optimal path of the $(k-1)^{th}$ symbol, and the part $x_{k-t+1} \cdots x_{k-1}x_k$ in each first path belonging to the same group adopts possible output levels of a standard constellation point. The grouping process and the determination process of the optimal path and the optimal accumulated path distance may refer to the description in Example 2.

In some exemplary implementations, determining the optimal path and the optimal accumulated path distance corresponding to the group according to the branch path metric value of the $k^{th}$ symbol under the paths in the group and the optimal accumulated path distance of the $(k-1)^{th}$ symbol under the path selected from optimal paths of the $(k-1)^{th}$ symbol includes: for each path in the group, calculating a sum of the branch path metric value of the $k^{th}$ symbol under the path and the optimal accumulated path distance of the $(k-1)^{th}$ symbol under the path selected from the optimal paths of the $(k-1)^{th}$ symbol, and taking the sum as the accumulated path distance of the $k^{th}$ symbol under the path; taking a path corresponding to a minimum accumulated path distance of the paths in the group as the optimal path corresponding to the group; and taking the minimum accumulated path distance of the paths in the group as the optimal accumulated path distance corresponding to the group.

In the implementations of the present application, no matter what value n takes, only $m^{t+1}$ branch path metric values, i.e., $m^{t+1}$ first paths, are calculated for each symbol, and $m^t$ optimal paths and optimal accumulated path distances are stored, so that the number of branch path metric values to be calculated, and the number of optimal paths and optimal accumulated path distances to be stored, are reduced, thereby saving the computing resources and storage resources.

In some exemplary implementations, determining, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol includes: grouping the first paths, where paths in the same group include paths having the same value of the $k^{th}$ symbol among the first paths; and for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, where the path selected from the optimal paths of the $(k-1)^{th}$ symbol includes: a path of the optimal paths of the $(k-1)^{th}$ symbol having the same value of the $(k-1)^{th}$ symbol as the paths in the group; forming the optimal path of the $k^{th}$ symbol from optimal paths corresponding to all groups; and forming the optimal accumulated path distance of the $k^{th}$ symbol under the optimal path of the $k^{th}$ symbol from optimal accumulated path distances corresponding to all groups.

In some exemplary implementations, assuming that the first path is $x_{k-(n-1)}x_{k-(n-2)} \cdots x_{k-1}x_k$, the optimal path of the $(k-1)^{th}$ symbol is $x_{k-1-(n-1)}x_{k-1-(n-2)} \cdots x_{k-1}$, then the part $x_{k-(n-1)}x_{k-(n-2)} \cdots x_{k-1}$ in each first path belonging to the same group is the same as the part $x_{k-(n-1)}x_{k-(n-2)} \cdots x_{k-1}$ in the optimal path of the $(k-1)^{th}$ symbol, and the part $x_k$ in each first path belonging to the same group adopts possible output levels of a standard constellation point. The grouping process and the determination process of the optimal path and the optimal accumulated path distance may refer to the description in Example 1.

In some exemplary implementations, determining the optimal path and the optimal accumulated path distance corresponding to the group according to the branch path metric value of the $k^{th}$ symbol under the paths in the group and the optimal accumulated path distance of the $(k-1)^{th}$ symbol under the path selected from optimal paths of the $(k-1)^{th}$ symbol includes: for each path in the group, calculating a sum of the branch path metric value of the $k^{th}$ symbol under the path of the group and the optimal accumulated path distance of the $(k-1)^{th}$ symbol under the path selected from the optimal paths of the $(k-1)^{th}$ symbol, and taking the sum as the accumulated path distance of the $k^{th}$ symbol under the path; taking a path corresponding to a minimum accumulated path distance of the paths in the group as the optimal path corresponding to the group; and taking the minimum accumulated path distance of the paths in the group as the optimal accumulated path distance corresponding to the group.

In the implementations of the present application, no matter what value n takes, only $m^2$ branch path metric values, i.e., $m^2$ first paths, are calculated for each symbol, and m optimal paths and optimal accumulated path distances are stored, so that the number of branch path metric values to be calculated, and the number of optimal paths and optimal accumulated path distances to be stored, are reduced.

At operation 203, storing the optimal path of the $k^{th}$ symbol and the optimal accumulated path distance of the $k^{th}$ symbol under the optimal path of the $k^{th}$ symbol.

In some exemplary implementations, when the optimal path of the $k^{th}$ symbol is buffered, a value of each symbol in the optimal optical path may be buffered.

In some exemplary implementations, after storing the optimal path of the $k^{th}$ symbol and the optimal accumulated path distance of the $k^{th}$ symbol under the optimal path of the $k^{th}$ symbol, the method further includes: obtaining a decided level signal according to the optimal accumulated path distance of the $k^{th}$ symbol under the optimal path of the $k^{th}$ symbol.

In some exemplary implementations, obtaining the decided level signal according to the optimal accumulated path distance of the $k^{th}$ symbol under the optimal path of the $k^{th}$ symbol includes: performing related operations of traceback and decoding on the optimal accumulated path distance of the $k^{th}$ symbol under the optimal path of the $k^{th}$ symbol, to obtain a decoded decision value which is decided and output to obtain a decided level signal.

In the method for implementing an MLSE equalizer according to the implementations of the present application, according to an optimal path of a $(k-1)^{th}$ symbol, a first path corresponding to a $k^{th}$ symbol and having a branch path metric value to be calculated is determined, which reduces the number of paths having branch path metric values to be calculated so that the number of optimal paths to be determined and stored is also reduced, and the required computing resources and storage resources are saved.

To facilitate understanding of the method for implementing an MLSE equalizer according to the implementations of the present application, two examples are listed below for explanation, which are not intended to limit the scope of the method for implementing an MLSE equalizer according to the implementations of the present application.

**Example 1**

In this example, n=3, t=1, NRZ modulation is adopted, and each symbol has two values, +1 and -1.

The MLSE equalizer in this example is implemented as follows.

A signal to be equalized is acquired.

A standard constellation point corresponding to a 1st symbol of the signal to be equalized has two values, i.e., -1 and +1, the 1st symbol does not have an optimal path and an optimal accumulated path distance of a previous symbol, and an initialized optimal accumulated path distance is 0.

A 2nd symbol has four first paths, $(x_1=-1, x_2=-1)$, $(x_1=-1, x_2=+1)$, $(x_1=+1, x_2=-1)$ and $(x_1=+1, x_2=+1)$, each having a branch path metric value to be calculated.

According to a value of the 2nd symbol of the signal to be equalized, the branch path metric value corresponding to each first path is calculated.

Of the above four paths, the paths $(x_1=-1, x_2=-1)$ and $(x_1=+1, x_2=-1)$ are grouped into group 1, and the paths $(x_1=-1, x_2=+1)$ and $(x_1=+1, x_2=+1)$ are grouped into group 2.

For group 1, an accumulated path distance $D(x_1=-1, x_2=-1)=D(x_1=-1)+P(x_1=-1, x_2=-1)$ of the 2nd symbol under the path $(x_1=-1, x_2=-1)$ is calculated; and an accumulated path distance $D(x_1=+1, x_2=-1)=D(x_1=+1)+P(x_1=+1, x_2=-1)=P(x_1=*1, x_2=-1)$ of the 2nd symbol under the path $(x_1=+1, x_2=-1)$ is calculated. Assuming that $D(x_1=-1, x_2=-1)$ is less than $D(x_1=+1, x_2=-1)$, then the optimal path corresponding to group 1 is $(x_1=-1, x_2=-1)$, and the optimal accumulated path distance of group 1 is $D(x_1=-1, x_2=-1)$.

For group 2, an accumulated path distance $D(x_1=-1, x_2=+1)=D(x_1=-1)+P(x_1=-1, x_2=+1)$ of the 2nd symbol under the path $(x_1=-1, x_2=+1)$ is calculated; and an accumulated path distance $D(x_1=+1, x_2=+1)=D(x_1=+1)+P(x_1=+1, x_2=+1)$ of the 2nd symbol under the path $(x_1=+1, x_2=+1)$ is calculated. Assuming that $D(x_1=-1, x_2=+1)$ is less than $D(x_1=+1, x_2=+1)$, then the optimal path corresponding to group 2 is $(x_1=-1, x_2=+1)$, and the optimal accumulated path distance of group 2 is $D(x_1=-1, x_2=+1)$.

The optimal path of group 1 and the optimal path of group 2 form an optimal path of the 2nd symbol, and the optimal accumulated path distance of group 1 and the optimal accumulated path distance of group 2 form an optimal accumulated path distance of the 2nd symbol.

Therefore, the optimal path of the 2nd symbol includes the paths $(x_1=-1, x_2=-1)$ and $(x_1=-1, x_2=+1)$, and the optimal accumulated path distance of the 2nd symbol includes $D(x_1=-1, x_2=-1)$ and $D(x_1=-1, x_2=+1)$.

According to the optimal path of the 2nd symbol, the first paths of the 3rd symbol having branch path metric values to be calculated are determined and include four first paths, i.e., $(x_1=-1, x_2=-1, x_3=-1)$, $(x_1=-1, x_2=-1, x_3=+1)$, $(x_1=-1, x_2=+1, x_3=-1)$ and $(x_1=-1, x_2=+1, x_3=+1)$. In other words, among the first paths having branch path metric values to be calculated of the 3rd symbol, a path from the 1st symbol to the 2nd symbol is the optimal path of the 2nd symbol.

According to a value of the 3rd symbol of the signal to be equalized, the branch path metric value corresponding to each first path is calculated.

Of the above four paths, the paths $(x_1=-1, x_2=-1, x_3=-1)$ and $(x_1=-1, x_2=+1, x_3=-1)$ are grouped into group 1, and the paths $(x_1=-1, x_2=-1, x_3=+1)$ and $(x_1=-1, x_2=+1, x_3=+1)$ are grouped into group 2.

For group 1, an accumulated path distance $D(x_1=-1, x_2=-1, x_3=-1)=D(x_1=-1, x_2=-1)+P(x_1=-1, x_2=-1, x_3=-1)$ of the 3rd symbol under the path $(x_1=-1, x_2=-1, x_3=-1)$ is calculated; and an accumulated path distance $D(x_1=-1, x_2=+1, x_3=-1)=D(x_1=-1, x_2=+1)+P(x_1=-1, x_2=+1, x_3=-1)$ of the 3rd symbol under the path $(x_1=-1, x_2=+1, x_3=-1)$ is calculated. Assuming that $D(x_1=-1, x_2=-1, x_3=-1)$ is greater than $D(x_1=-1, x_2=+1, x_3=-1)$, then the optimal path corresponding to group 1 is $(x_1=-1, x_2=+1, x_3=-1)$, and the optimal accumulated path distance of group 1 is $D(x_1=-1, x_2=+1, x_3=-1)$.

For group 2, an accumulated path distance $D(x_1=-1, x_2=-1, x_3=+1)=D(x_1=-1, x_2=-1)+P(x_1=-1, x_2=-1, x_3=+1)$ of the 3rd symbol under the path $(x_1=-1, x_2=-1, x_3=+1)$ is calculated; and an accumulated path distance $D(x_1=-1, x_2=+1, x_3=+1)=D(x_1=-1, x_2=+1)+P(x_1=-1, x_2=+1, x_3=+1)$ of the 3rd symbol under the path $(x_1=-1, x_2=+1, x_3=+1)$ is calculated. Assuming that $D(x_1=-1, x_2=-1, x_3=+1)$ is less than $D(x_1=-1, x_2=+1, x_3=+1)$, then the optimal path corresponding to group 2 is $(x_1=-1, x_2=-1, x_3=+1)$, and the optimal accumulated path distance of group 2 is $D(x_1=-1, x_2=-1, x_3=+1)$.

The optimal path of group 1 and the optimal path of group 2 form an optimal path of the 3rd symbol, and the optimal accumulated path distance of group 1 and the optimal accumulated path distance of group 2 form an optimal accumulated path distance of the 3rd symbol.

Therefore, the optimal path of the 3rd symbol includes the paths $(x_1=-1, x_2=+1, x_3=-1)$ and $(x_1=-1, x_2=-1, x_3=+1)$, and the optimal accumulated path distance of the 3rd symbol includes $D(x_1=-1, x_2=+1, x_3=-1)$ and $D(x_1=-1, x_2=-1, x_3=+1)$.

According to the optimal path of the 3rd symbol, the first paths of the 4th symbol having branch path metric values to be calculated are determined and include four first paths, i.e., $(x_1=-1, x_2=+1, x_3=-1, x_4=-1)$, $(x_1=-1, x_2=+1, x_3=-1, x_4=+1)$, $(x_1=-1, x_2=-1, x_3=+1, x_4=-1)$ and $(x_1=-1, x_2=-1, x_3=+1, x_4=+1)$. In other words, among the first paths having branch path metric values to be calculated of the 4th symbol, a path from the 1st symbol to the 3rd symbol is the optimal path of the 3rd symbol.

According to a value of the 4th symbol of the signal to be equalized, the branch path metric value corresponding to each first path is calculated.

Of the above four paths, the paths $(x_1=-1, x_2=+1, x_3=-1, x_4=-1)$ and $(x_1=-1, x_2=-1, x_3=+1, x_4=-1)$ are grouped into group 1, and the paths $(x_1=-1, x_2=+1, x_3=-1, x_4=+1)$ and $(x_1=-1, x_2=-1, x_3=+1, x_4=+1)$ are grouped into group 2.

For group 1, an accumulated path distance $D(x_1=-1, x_2=+1, x_3=-1, x_4=-1)=D(x_1=-1, x_2=+1, x_3=-1)+P(x_1=-1, x_2=+1, x_3=-1, x_4=-1)$ of the 4th symbol under the path $(x_1=-1, x_2=+1, x_3=-1, x_4=-1)$ is calculated; and an accumulated path distance $D(x_1=-1, x_2=-1, x_3=+1, x_4=-1)=D(x_1=-1, x_2=-1, x_3=+1)+P(x_1=-1, x_2=-1, x_3=+1, x_4=-1)$ of the 4th symbol under the path $(x_1=-1, x_2=-1, x_3=+1, x_4=-1)$ is calculated. Assuming that $D(x_1=-1, x_2=+1, x_3=-1, x_4=-1)$ is less than $D(x_1=-1, x_2=-1, x_3=+1, x_4=-1)$, then the optimal path corresponding to group 1 is $(x_1=-1, x_2=+1, x_3=-1, x_4=-1)$, and the optimal accumulated path distance of group 1 is $D(x_1=-1, x_2=+1, x_3=-1, x_4=-1)$.

For group 2, an accumulated path distance $D(x_1=-1, x_2=+1, x_3=-1, x_4=+1)=D(x_1=-1, x_2=+1, x_3=-1)+P(x_1=-1, x_2=+1, x_3=-1, x_4=+1)$ of the 4th symbol under the path $(x_1=-1, x_2=+1, x_3=-1, x_4=+1)$ is calculated; and an accumulated path distance $D(x_1=-1, x_2=-1, x_3=+1, x_4=+1)=D(x_1=-1, x_2=-1, x_3=+1)+P(x_1=-1, x_2=-1, x_3=+1, x_4=+1)$ of the 4th symbol under the path $(x_1=-1, x_2=-1, x_3=+1, x_4=+1)$ is calculated. Assuming that $D(x_1=-1, x_2=+1, x_3=-1, x_4=+1)$ is greater than $D(x_1=-1, x_2=-1, x_3=+1, x_4=+1)$, then the optimal path corresponding to group 2 is $(x_1=-1, x_2=-1, x_3=+1, x_4=+1)$, and the optimal accumulated path distance of group 2 is $D(x_1=-1, x_2=-1, x_3=+1, x_4=+1)$.

The optimal path of group 1 and the optimal path of group 2 form an optimal path of the 4th symbol, and the optimal accumulated path distance of group 1 and the optimal accumulated path distance of group 2 form an optimal accumulated path distance of the 4th symbol.

Therefore, the optimal path of the 4th symbol includes the paths $(x_1=-1, x_2=+1, x_3=-1, x_4=-1)$ and $(x_1=-1, x_2=-1, x_3=+1, x_4=+1)$, and the optimal accumulated path distance of the 4th symbol includes $D(x_1=-1, x_2=+1, x_3=-1, x_4=-1)$ and $D(x_1=-1, x_2=-1, x_3=+1, x_4=+1)$.

**Example 2**

In this example, n=4, t=2, NRZ modulation is adopted, and each symbol has two values, +1 and -1.

An exemplary implementation process of an MLSE equalizer is as follows.

A signal to be equalized is acquired.

A standard constellation point corresponding to a 1st symbol of the signal to be equalized has two values, i.e., -1 and +1, the 1st symbol does not have an optimal path and an optimal accumulated path distance of a previous symbol, and an initialized optimal accumulated path distance is 0.

A 2nd symbol has four first paths, $(x_1=-1, x_2=-1)$, $(x_1=-1, x_2=+1)$, $(x_1=+1, x_2=-1)$, $(x_1=*1, x_2=+1)$, each having a branch path metric value to be calculated.

According to a value of the 2nd symbol of the signal to be equalized, the branch path metric value corresponding to each first path is calculated.

Of the above four paths, the paths $(x_1=-1, x_2=-1)$ and $(x_1=+1, x_2=-1)$ are grouped into group 1, and the paths $(x_1=-1, x_2=+1)$ and $(x_1=+1, x_2=+1)$ are grouped into group 2.

For group 1, an accumulated path distance $D(x_1=-1, x_2=-1)=D(x_1=-1)+P(x_1=-1, x_2=-1)$ of the 2nd symbol under the path $(x_1=-1, x_2=-1)$ is calculated; and an accumulated path distance $D(x_1=+1, x_2=-1)=D(x_1=+1)+P(x_1=+1, x_2=-1)$ of the 2nd symbol under the path $(x_1=+1, x_2=-1)$ is calculated. Assuming that $D(x_1=-1, x_2=-1)$ is less than $D(x_1=+1, x_2=-1)$, then the optimal path corresponding to group 1 is $(x_1=-1, x_2=-1)$, and the optimal accumulated path distance of group 1 is $D(x_1=-1, x_2=-1)$.

For group 2, an accumulated path distance $D(x_1=-1, x_2=+1)=D(x_1=-1)+P(x_1=-1, x_2=+1)$ of the 2nd symbol under the path $(x_1=-1, x_2=+1)$ is calculated; and an accumulated path distance $D(x_1=+1, x_2=+1)=D(x_1=+1)+P(x_1=+1, x_2=+1)$ of the 2nd symbol under the path $(x_1=+1, x_2=+1)$ is calculated. Assuming that $D(x_1=-1, x_2=+1)$ is less than $D(x_1=+1, x_2=+1)$, then the optimal path corresponding to group 2 is $(x_1=-1, x_2=+1)$, and the optimal accumulated path distance of group 2 is $D(x_1=-1, x_2=+1)$.

The optimal path of group 1 and the optimal path of group 2 form an optimal path of the 2nd symbol, and the optimal accumulated path distance of group 1 and the optimal accumulated path distance of group 2 form an optimal accumulated path distance of the 2nd symbol.

Therefore, the optimal path of the 2nd symbol includes the paths $(x_1=-1, x_2=-1)$ and $(x_1=-1, x_2=+1)$, and the optimal accumulated path distance of the 2nd symbol includes $D(x_1=-1, x_2=-1)$ and $D(x_1=-1, x_2=+1)$.

According to the optimal path of the 2nd symbol, the first paths of the 3rd symbol having branch path metric values to be calculated are determined and include four first paths, i.e., $(x_1=-1, x_2=-1, x_3=-1)$, $(x_1=-1, x_2=-1, x_3=+1)$, $(x_1=-1, x_2=+1, x_3=-1)$ and $(x_1=-1, x_2=+1, x_3=+1)$. In other words, among the first paths having branch path metric values to be calculated of the 3rd symbol, a path from the 1st symbol to the 2nd symbol is the optimal path of the 2nd symbol.

According to a value of the 3rd symbol of the signal to be equalized, the branch path metric value corresponding to each first path is calculated.

Of the above four paths, the paths $(x_1=-1, x_2=-1, x_3=-1)$ and $(x_1=-1, x_2=+1, x_3=-1)$ are grouped into group 1, and the paths $(x_1=-1, x_2=-1, x_3=+1)$ and $(x_1=-1, x_2=+1, x_3=+1)$ are grouped into group 2.

For group 1, an accumulated path distance $D(x_1=-1, x_2=-1, x_3=-1)=D(x_1=-1, x_2=-1)+P(x_1=-1, x_2=-1, x_3=-1)$ of the 3rd symbol under the path $(x_1=-1, x_2=-1, x_3=-1)$ is calculated; and the accumulated path distance $D(x_1=-1, x_2=+1, x_3=-1)=D(x_1=-1, x_2=+1)+P(x_1=-1, x_2=+1, x_3=-1)$ for the 3rd symbol under the path $(x_1=-1, x_2=+1, x_3=-1)$ is calculated. Assuming that $D(x_1=-1, x_2=-1, x_3=-1)$ is greater than $D(x_1=-1, x_2=+1, x_3=-1)$, then the optimal path corresponding to group 1 is $(x_1=-1, x_2=+1, x_3=-1)$, and the optimal accumulated path distance of group 1 is $D(x_1=-1, x_2=+1, x_3=-1)$.

For group 2, an accumulated path distance $D(x_1=-1, x_2=-1, x_3=+1)=D(x_1=-1, x_2=-1)+P(x_1=-1, x_2=-1, x_3=+1)$ of the 3rd symbol under the path $(x_1=-1, x_2=-1, x_3=+1)$ is calculated; and an accumulated path distance $D(x_1=-1, x_2=+1, x_3=+1)=D(x_1=-1, x_2=+1)+P(x_1=-1, x_2=+1, x_3=+1)$ of the 3rd symbol under the path $(x_1=-1, x_2=+1, x_3=+1)$ is calculated. Assuming that $D(x_1=-1, x_2=-1, x_3=+1)$ is less than $D(x_1=-1, x_2=+1, x_3=+1)$, then the optimal path corresponding to group 2 is $(x_1=-1, x_2=-1, x_3=+1)$, and the optimal accumulated path distance of group 2 is $D(x_1=-1, x_2=-1, x_3=+1)$.

The optimal path of group 1 and the optimal path of group 2 form an optimal path of the 3rd symbol, and the optimal accumulated path distance of group 1 and the optimal accumulated path distance of group 2 form an optimal accumulated path distance of the 3rd symbol.

Therefore, the optimal path of the 3rd symbol includes the paths $(x_1=-1, x_2=+1, x_3=-1)$ and $(x_1=-1, x_2=-1, x_3=+1)$, and the optimal accumulated path distance of the 3rd symbol includes $D(x_1=-1, x_2=+1, x_3=-1)$ and $D(x_1=-1, x_2=-1, x_3=+1)$.

According to the optimal path of the 3rd symbol, the first paths of the 4th symbol having branch path metric values to be calculated are determined and include eight first paths, i.e., $(x_1=-1, x_2=+1, x_3=-1, x_4=-1)$, $(x_1=-1, x_2=+1, x_3=-1, x_4=+1)$, $(x_1=-1, x_2=+1, x_3=+1, x_4=-1)$, $(x_1=-1, x_2=+1, x_3=+1, x_4=+1)$, $(x_1=-1, x_2=-1, x_3=+1, x_4=-1)$, $(x_1=-1, x_2=-1, x_3=+1, x_4=+1)$, $(x_1=-1, x_2=-1, x_3=-1, x_4=-1)$ and $(x_1=-1, x_2=-1, x_3=-1, x_4=+1)$. In other words, among the first paths having branch path metric values to be calculated of the 4th symbol, a path from the 1st symbol to the 2nd symbol is the optimal path of the 3rd symbol.

According to a value of the 4th symbol of the signal to be equalized, the branch path metric value corresponding to each first path is calculated.

Of the above eight paths, the paths $(x_1=-1, x_2=+1, x_3=-1, x_4=-1)$ and $(x_1=-1, x_2=-1, x_3=-1, x_4=-1)$ are grouped into group 1, and the paths $(x_1=-1, x_2=+1, x_3=-1, x_4=+1)$ and $(x_1=-1, x_2=-1, x_3=-1, x_4=+1)$ are grouped into group 2, the paths $(x_1=-1, x_2=+1, x_3=+1, x_4=-1)$ and $(x_1=-1, x_2=-1, x_3=+1, x_4=-1)$ are grouped into group 3, and the paths $(x_1=-1, x_2=+1, x_3=+1,$

$x_4=+1$) and ($x_1=-1$, $x_2=-1$, $x_3=+1$, $x_4=+1$) are grouped into group 4.

For group 1, an accumulated path distance $D(x_1=-1, x_2=+1, x_3=-1, x_4=-1)=D(x_1=-1, x_2=+1, x_3=-1)+P(x_1=-1, x_2=+1, x_3=-1, x_4=-1)$ of the 4th symbol under the path ($x_1=-1$, $x_2=+1$, $x_3=-1$, $x_4=-1$) is calculated; and an accumulated path distance $D(x_1=-1, x_2=-1, x_3=-1, x_4=-1)=D(x_1=-1, x_2=-1, x_3=-1)+P(x_1=-1, x_2=-1, x_3=-1, x_4=-1)$ of the 4th symbol under the path ($x_1=-1$, $x_2=-1$, $x_3=-1$, $x_4=-1$) is calculated. Assuming that $D(x_1=-1, x_2=+1, x_3=-1, x_4=-1)$ is less than $D(x_1=-1, x_2=-1, x_3=-1, x_4=-1)$, then the optimal path corresponding to group 1 is ($x_1=-1$, $x_2=+1$, $x_3=-1$, $x_4=-1$), and the optimal accumulated path distance of group 1 is $D(x_1=-1, x_2=+-1, x_3=-1, x_4=-1)$.

For group 2, an accumulated path distance $D(x_1=-1, x_2=+1, x_3=-1, x_4=+1)=D(x_1=-1, x_2=+1, x_3=-1)+P(x_1=-1, x_2=+1, x_3=-1, x_4=+1)$ of the 4th symbol under the path ($x_1=-1$, $x_2=+1$, $x_3=-1$, $x_4=+1$) is calculated; and an accumulated path distance $D(x_1=-1, x_2=-1, x_3=-1, x_4=+1)=D(x_1=-1, x_2=-1, x_3=-1)+P(x_1=-1, x_2=-1, x_3=-1, x_4=+1)$ of the 4th symbol under the path ($x_1=-1$, $x_2=-1$, $x_3=-1$, $x_4=+1$) is calculated. Assuming that $D(x_1=-1, x_2=+1, x_3=-1, x_4=+1)$ is greater than $D(x_1=-1, x_2=-1, x_3=-1, x_4=+1)$, then the optimal path corresponding to group 2 is ($x_1=-1$, $x_2=-1$, $x_3=-1$, $x_4=+1$), and the optimal accumulated path distance of group 2 is $D(x_1=-1, x_2=-1, x_3=-1, x_4=+1)$.

For group 3, an accumulated path distance $D(x_1=-1, x_2=+1, x_3=+1, x_4=-1)=D(x_1=-1, x_2=+1, x_3=+1)+P(x_1=-1, x_2=+1, x_3=+1, x_4=-1)$ of the 4th symbol under the path ($x_1=-1$, $x_2=+1$, $x_3=+1$, $x_4=-1$) is calculated; and an accumulated path distance $D(x_1=-1, x_2=-1, x_3=+1, x_4=-1)=D(x_1=-1, x_2=-1, x_3=+1)+P(x_1=-1, x_2=-1, x_3=+1, x_4=-1)$ of the 4th symbol under the path ($x_1=-1$, $x_2=-1$, $x_3=+1$, $x_4=-1$) is calculated. Assuming that $D(x_1=-1, x_2=+1, x_3=+1, x_4=-1)$ is less than $D(x_1=-1, x_2=-1, x_3=+1, x_4=-1)$, then the optimal path corresponding to group 3 is ($x_1=-1$, $x_2=+1$, $x_3=+1$, $x_4=-1$), and the optimal accumulated path distance of group 3 is $D(x_1=-1, x_2=+1, x_3=+1, x_4=-1)$.

For group 4, an accumulated path distance $D(x_1=-1, x_2=+1, x_3=+1, x_4=+1)=D(x_1=-1, x_2=+1, x_3=+1)+P(x_1=-1, x_2=+1, x_3=+1, x_4=+1)$ of the 4th symbol under the path ($x_1=-1$, $x_2=+1$, $x_3=+1$, $x_4=+1$) is calculated; and an accumulated path distance $D(x_1=-1, x_2=-1, x_3=+1, x_4=+1)=D(x_1=-1, x_2=-1, x_3=+1)+P(x_1=-1, x_2=-1, x_3=+1, x_4=+1)$ of the 4th symbol under the path ($x_1=-1$, $x_2=-1$, $x_3=+1$, $x_4=+1$) is calculated. Assuming that $D(x_1=-1, x_2=+1, x_3=+1, x_4=+1)$ is greater than $D(x_1=-1, x_2=-1, x_3=+1, x_4=+1)$, then the optimal path corresponding to group 4 is ($x_1=-1$, $x_2=-1$, $x_3=+1$, $x_4=+1$), and the optimal accumulated path distance of group 4 is $D(x_1=-1, x_2=-1, x_3=+1, x_4=+1)$.

The optimal paths of group 1, group 2, group 3 and group 4 form an optimal path of the 4th symbol, and the optimal accumulated path distances of group 1, group 2, group 3 and group 4 form an optimal accumulated path distance of the 4th symbol.

Therefore, the optimal path of the 4th symbol includes the paths ($x_1=-1$, $x_2=+1$, $x_3=-1$, $x_4=-1$), ($x_1=-1$, $x_2=-1$, $x_3=-1$, $x_4=+1$), ($x_1=-1$, $x_2=+1$, $x_3=+1$, $x_4=-1$), and ($x_1=-1$, $x_2=-1$, $x_3=+1$, $x_4=+1$), and the optimal accumulated path distance of the 4th symbol includes $D(x_1=-1, x_2=+1, x_3=-1, x_4=-1)$, $D(x_1=-1, x_2=-1, x_3=-1, x_4=+1)$, $D(x_1=-1, x_2=+1, x_3=+1, x_4=-1)$ and $D(x_1=-1, x_2=-1, x_3=+1, x_4=+1)$.

In a second aspect, another implementation of the present application provides an electronic device, including: at least one processor; and a memory having at least one program stored thereon which, when executed by the at least one processor, causes any one of the above methods for implementing an MLSE equalizer to be implemented.

The processor is a device with a data processing capability, including but not limited to a central processing unit (CPU), or the like. The memory is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH).

In some implementations, the processor and the memory are connected to each other via a bus, and further connected to other components of a computing device.

In a third aspect, still another implementation of the present application provides a computer-readable medium having a computer program stored thereon which, when executed by a processor, causes any one of the above methods for implementing an MLSE equalizer to be implemented.

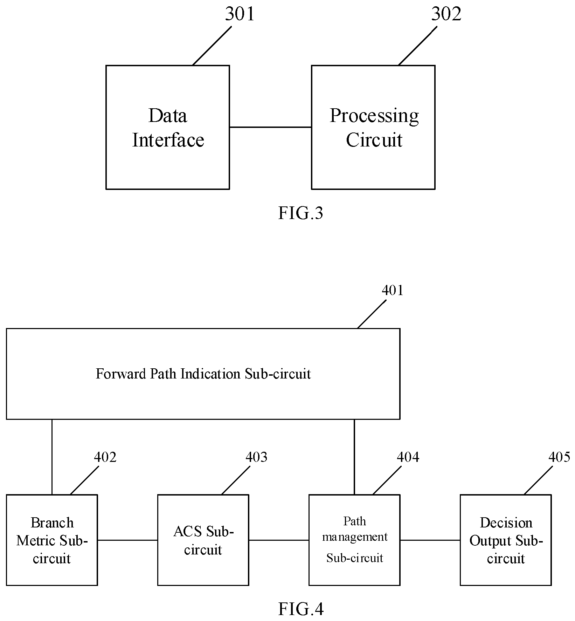

FIG. 3 is a block diagram of a chip for implementing an MLSE equalizer according to the present application.

In a fourth aspect, yet another implementation of the present application provides a chip for implementing an MLSE equalizer, including: a data interface 301 and processing circuit 302. The processing circuit is configured to read an instruction stored on a peripheral control circuit through the data interface, and perform any one of the above methods for implementing an MLSE equalizer.

In some exemplary implementations, as shown in FIG. 4, the processing circuit 302 includes: a forward path indication sub-circuit 401 configured to determine, according to an optimal path of a $(k-1)^{th}$ symbol, a first path corresponding to a $k^{th}$ symbol and having a branch path metric value to be calculated, where k is an integer greater than or equal to 2; a branch metric sub-circuit 402 configured to calculate the branch path metric value of the $k^{th}$ symbol under the first path; an add-compare-select sub-circuit 403 configured to determine, according to the branch path metric value of the $k^{th}$ symbol under the first path and an optimal accumulated path distance of the $(k-1)^{th}$ symbol under the optimal path of the $(k-1)^{th}$ symbol, an optimal path of the $k^{th}$ symbol and an optimal accumulated path distance of the $k^{th}$ symbol under the optimal path of the $k^{th}$ symbol; and a path management sub-circuit 404 configured to store the optimal path of the $k^{th}$ symbol and the optimal accumulated path distance of the $k^{th}$ symbol under the optimal path of the $k^{th}$ symbol.

In some exemplary implementations, the chip for implementing an MLSE equalizer includes, for example, an application specific integrated circuit (ASIC) chip or a field-programmable gate array (FPGA) chip.

In some exemplary implementations, the chip further includes: a decision output sub-circuit 405 configured to obtain a decided level signal according to the optimal accumulated path distance of the $k^{th}$ symbol under the optimal path of the $k^{th}$ symbol.

In some exemplary implementations, the number of first paths is smaller than the number of second paths, and a value of each symbol in each second path includes m possible output levels, where m is an integer greater than or equal to 1.

In some exemplary implementations, a first target symbol in the first path takes the same value as a corresponding symbol in the optimal path of the $(k-1)^{th}$ symbol. The first target symbol includes the $(k-(n-1))^{th}$ to $(k-t)^{th}$ symbols, where n is the number of tap coefficients and is less than or equal to k, and t is an integer greater than or equal to 1 and less than or equal to n-2. A value of a second target symbol in the first path includes m possible output levels of a standard constellation point. The second target symbol includes the $(k-t+1)^{th}$ to $(k)^{th}$ symbols.

In some exemplary implementations, the add-compare-select sub-circuit 403 is configured to determine, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol by: grouping the first paths, where paths in the same group include paths having the same values from the $(k-t+1)^{th}$ to $k^{th}$ symbols among the first paths; for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, where the path selected from the optimal paths of the $(k-1)^{th}$ symbol includes: a path of the optimal paths of the $(k-1)^{th}$ symbol having the same values from the $(k-t+1)^{th}$ to $(k-1)^{th}$ symbols as the paths in the group; forming the optimal path of the $k^{th}$ symbol from optimal paths corresponding to all groups; and forming the optimal accumulated path distance of the $k^{th}$ symbol under the optimal path of the $k^{th}$ symbol from optimal accumulated path distances corresponding to all groups.

In some exemplary implementations, the add-compare-select sub-circuit 403 is configured to determine the optimal path and the optimal accumulated path distance corresponding to the group according to the branch path metric value of the $k^{th}$ symbol under the paths in the group and the optimal accumulated path distance of the $(k-1)^{th}$ symbol under the path selected from optimal paths of the $(k-1)^{th}$ symbol by: for each path in the group, calculating a sum of the branch path metric value of the $k^{th}$ symbol under the path and the optimal accumulated path distance of the $(k-1)^{th}$ symbol under the path selected from the optimal paths of the $(k-1)^{th}$ symbol, and taking the sum as the accumulated path distance of the $k^{th}$ symbol under the path; taking a path corresponding to a minimum accumulated path distance of the paths in the group as the optimal path corresponding to the group; and taking the minimum accumulated path distance of the paths in the group as the optimal accumulated path distance corresponding to the group.

In some exemplary implementations, when t is 1, the first target symbol includes: the $(k-(n-1))^{th}$ to $(k-t)^{th}$ symbols, and the second target symbol includes: the $k^{th}$ symbol.

In some exemplary implementations, the add-compare-select sub-circuit 403 is configured to determine, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol by: grouping the first paths, where paths in the same group include paths having the same value of the $k^{th}$ symbol among the first paths; and for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, where the path selected from the optimal paths of the $(k-1)^{th}$ symbol includes: a path of the optimal paths of the $(k-1)^{th}$ symbol having the same value of the $(k-1)^{th}$ symbol as the paths in the group; forming the optimal path of the $k^{th}$ symbol from optimal paths corresponding to all groups; and forming the optimal accumulated path distance of the $k^{th}$ symbol under the optimal path of the $k^{th}$ symbol from optimal accumulated path distances corresponding to all groups.

The specific implementation process of the chip for implementing the MLSE equalizer is the same as that of the method for implementing an MLSE equalizer provided in the foregoing implementations, and thus is not repeated here.

Those of ordinary skill in the art will appreciate that all or some operations of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash or any other memory technology, a CD-ROM, a digital versatile disk (DVD) or any other optical disk storage, a magnetic cartridge, a magnetic tape, a magnetic disk storage or any other magnetic memory, or may be any other medium used for storing the desired information and accessible by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium.

The present disclosure has disclosed exemplary implementations, and although specific terms are employed, they are used and should be interpreted in a generic and descriptive sense only and not for purposes of limitation. In some instances, as would be apparent to one skilled in the art, features, characteristics and/or elements described in connection with a particular implementation may be used alone or in combination with features, characteristics and/or elements described in connection with another implementation, unless expressly stated otherwise. It will, therefore, be understood by those skilled in the art that various changes in form and details may be made therein without departing from the scope of the present application as set forth in the appended claims.

**Claims**

1.  A method for implementing a maximum likelihood sequence estimation equalizer, comprising:

    determining, according to an optimal path of a $(k-1)^{th}$ symbol, a first path corresponding to a $k^{th}$ symbol and having a branch path metric value to be calculated, where k is an integer greater than or equal to 2;
    calculating the branch path metric value of the $k^{th}$ symbol under the first path;
    determining, according to the branch path metric value of the $k^{th}$ symbol under the first path and an optimal accumulated path distance of the $(k-1)^{th}$ symbol under the optimal path of the $(k-1)^{th}$ symbol, an optimal path of the $k^{th}$ symbol and an optimal accumulated path distance of the $k^{th}$ symbol under the optimal path of the $k^{th}$ symbol; and
    storing the optimal path of the $k^{th}$ symbol and the optimal accumulated path distance of the $k^{th}$ symbol under the optimal path of the $k^{th}$ symbol.

2.  The method for implementing a maximum likelihood sequence estimation equalizer according to claim 1, wherein a number of first paths is smaller than a number of second paths, and a value of each symbol in each second path comprises m possible output levels, where m is an integer greater than or equal to 1.

3.  The method for implementing a maximum likelihood sequence estimation equalizer according to claim 1, wherein a first target symbol in the first path takes the same value as a corresponding symbol in the optimal path of the $(k-1)^{th}$ symbol, wherein the first target symbol comprises $(k-(n-1))^{th}$ to $(k-t)^{th}$ symbols, where n is a number of tap coefficients and is less than or equal to k, and t is an integer greater than or equal to 1 and less than or equal to n-2; and
    a value of a second target symbol in the first path comprises m possible output levels of a standard constellation point, wherein the second target symbol comprises $(k-t+1)^{th}$ to $(k)^{th}$ symbols.

4.  The method for implementing a maximum likelihood sequence estimation equalizer according to claim 3, wherein determining, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol comprises:

    grouping first paths, wherein paths in a same group comprise paths having same values from the $(k-t+1)^{th}$ to $k^{th}$ symbols among the first paths;
    for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, wherein the path selected from the optimal paths of the $(k-1)^{th}$ symbol comprises: a path of the optimal paths of the $(k-1)^{th}$ symbol having same values from the $(k-t+1)^{th}$ to $(k-1)^{th}$ symbols as the paths in the group;

forming the optimal path of the $k^{th}$ symbol from optimal paths corresponding to all groups; and

forming the optimal accumulated path distance of the $k^{th}$ symbol under the optimal path of the $k^{th}$ symbol from optimal accumulated path distances corresponding to all groups.

5. The method for implementing a maximum likelihood sequence estimation equalizer according to claim 4, wherein determining the optimal path and the optimal accumulated path distance corresponding to the group according to the branch path metric value of the $k^{th}$ symbol under the paths in the group and the optimal accumulated path distance of the $(k-1)^{th}$ symbol under the path selected from optimal paths of the $(k-1)^{th}$ symbol comprises:

for each path in the group, calculating a sum of the branch path metric value of the $k^{th}$ symbol under the path and the optimal accumulated path distance of the $(k-1)^{th}$ symbol under the path selected from the optimal paths of the $(k-1)^{th}$ symbol, and taking the sum as the accumulated path distance of the $k^{th}$ symbol under the path;

taking a path corresponding to a minimum accumulated path distance of the paths in the group as the optimal path corresponding to the group; and

taking the minimum accumulated path distance of the paths in the group as the optimal accumulated path distance corresponding to the group.

6. The method for implementing a maximum likelihood sequence estimation equalizer according to claim 3, wherein when t is 1, the first target symbol comprises: the $(k-(n-1))^{th}$ to $(k-t)^{th}$ symbols, and the second target symbol comprises: the $k^{th}$ symbol.

7. The method for implementing a maximum likelihood sequence estimation equalizer according to claim 6, wherein determining, according to the branch path metric value of the $k^{th}$ symbol under the first path and the optimal accumulated path distance of the $(k-1)^{th}$ symbol under the optimal path of the $(k-1)^{th}$ symbol, the optimal path of the $k^{th}$ symbol and the optimal accumulated path distance of the $k^{th}$ symbol under the optimal path of the $k^{th}$ symbol comprises:

grouping first paths, wherein paths in a same group comprise paths having a same value of the $k^{th}$ symbol among the first paths;

for the paths in the same group, determining an optimal path and an optimal accumulated path distance corresponding to the group according to the branch path metric value of the $k^{th}$ symbol under the paths in the group and the optimal accumulated path distance of the $(k-1)^{th}$ symbol under a path selected from optimal paths of the $(k-1)^{th}$ symbol, wherein the path selected from the optimal paths of the $(k-1)^{th}$ symbol comprises: a path of the optimal paths of the $(k-1)^{th}$ symbol having a same value of the $(k-1)^{th}$ symbol as the paths in the group;

forming the optimal path of the $k^{th}$ symbol from optimal paths corresponding to all groups; and

forming the optimal accumulated path distance of the $k^{th}$ symbol under the optimal path of the $k^{th}$ symbol from optimal accumulated path distances corresponding to all groups.

8. An electronic device, comprising:

at least one processor; and

a memory having at least one program stored thereon which, when executed by the at least one processor, causes the method for implementing a maximum likelihood sequence estimation equalizer according to any one of claims 1 to 7 to be implemented.

9. A computer readable medium having a computer program stored thereon which, when executed by a processor, causes the method for implementing a maximum likelihood sequence estimation equalizer according to any one of claims 1 to 7 to be implemented.

10. A chip for implementing a maximum likelihood sequence estimation equalizer, comprising: a data interface and a processing circuit, wherein

the processing circuit is configured to read an instruction stored on a peripheral control circuit through the data interface, and perform the method for implementing a maximum likelihood sequence estimation equalizer according to any one of claims 1 to 7.

MLSE Equalizer

X (k) →

| Branch metric Sub-module | ACS Sub-module | Path management Sub-module | Decision output Sub-module |
|---|---|---|---|

→ Y (k)

/101    /102    /103    /104

FIG. 1

/ 200

Determine, according to an optimal path of a $(k-1)^{th}$ symbol, a first path corresponding to a $k^{th}$ symbol and having a branch path metric value to be calculated, where k is an integer greater than or equal to 2

/ 201

Calculate the branch path metric value of the $k^{th}$ symbol under the first path

/ 202

Determine, according to the branch path metric value of the $k^{th}$ symbol under the first path and an optimal accumulated path distance of the $(k-1)^{th}$ symbol under the optimal path of the $(k-1)^{th}$ symbol, an optimal path of the $k^{th}$ symbol and an optimal accumulated path distance of the $k^{th}$ symbol under the optimal path of the $k^{th}$ symbol

/ 203

Store the optimal path of the $k^{th}$ symbol and the optimal accumulated path distance of the $k^{th}$ symbol under the optimal path of the $k^{th}$ symbol

FIG.2

301

302

Data
Interface

Processing
Circuit

FIG.3

401

Forward Path Indication Sub-circuit

402

403

404

405

Branch
Metric Sub-
circuit

ACS Sub-
circuit

Path
management
Sub-circuit

Decision
Output Sub-
circuit

FIG.4

# EP 4 580 133 A1

## INTERNATIONAL SEARCH REPORT

| International application No. |
|---|
| **PCT/CN2023/120012** |

### A. CLASSIFICATION OF SUBJECT MATTER

H04L 25/03(2006.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS: 最大似然, 估计, 均衡器, 最优, 路径, 符号, 分支路径值, 度量, 分支, 最佳, 累加, 路径距离, 存储, 和, 积, 加, 选择, Maximum Likelihood, Estimation, Equalizer, Optimum, Path, Symbol, Branch Path, Metric, Branch, Best, Accumulation, Path Distance, Store, MLSE, Sum, Product, Add, Select

### C. DOCUMENTS CONSIDERED TO BE RELEVANT

| Category* | Citation of document, with indication, where appropriate, of the relevant passages | Relevant to claim No. |
|---|---|---|
| A | CN 110061761 A (HUAWEI TECHNOLOGIES CO., LTD.) 26 July 2019 (2019-07-26) description, paragraph [0081]-paragraph [0143], claims 1-24, and figures 1-8 | 1-10 |
| A | CN 102948097 A (CISCO TECHNOLOGY, INC.) 27 February 2013 (2013-02-27) entire document | 1-10 |
| A | CN 103685105 A (HWA CREATE CORP., LTD.) 26 March 2014 (2014-03-26) entire document | 1-10 |
| A | CN 1787386 A (ZTE CORP.) 14 June 2006 (2006-06-14) entire document | 1-10 |
| A | CN 1841546 A (SONY CORP.) 04 October 2006 (2006-10-04) entire document | 1-10 |
| A | CN 1994003 A (ZTE CORP.) 04 July 2007 (2007-07-04) entire document | 1-10 |
| A | US 2022141057 A1 (SAMSUNG ELECTRONICS CO., LTD.) 05 May 2022 (2022-05-05) entire document | 1-10 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 November 2023** | **21 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120012**

| Patent document cited in search report | | | Publication date (day/month/year) | Patent family member(s) | | | Publication date (day/month/year) |
|---|---|---|---|---|---|---|---|
| CN | 110061761 | A | 26 July 2019 | None | | | |
| CN | 102948097 | A | 27 February 2013 | EP | 2509246 | B1 | 08 January 2014 |
| | | | | WO | 2011159540 | A1 | 22 December 2011 |
| | | | | US | 2011314358 | A1 | 22 December 2011 |
| | | | | US | 8601356 | B2 | 03 December 2013 |
| | | | | EP | 2398175 | A1 | 21 December 2011 |
| | | | | EP | 2398175 | B1 | 22 August 2012 |
| CN | 103685105 | A | 26 March 2014 | None | | | |
| CN | 1787386 | A | 14 June 2006 | None | | | |
| CN | 1841546 | A | 04 October 2006 | US | 2007234188 | A1 | 04 October 2007 |
| | | | | US | 7603611 | B2 | 13 October 2009 |
| | | | | JP | 2006286073 | A | 19 October 2006 |
| | | | | JP | 4622632 | B2 | 02 February 2011 |
| CN | 1994003 | A | 04 July 2007 | WO | 2006045226 | A1 | 04 May 2006 |
| US | 2022141057 | A1 | 05 May 2022 | US | 11456900 | B2 | 27 September 2022 |
| | | | | KR | 20220057203 | A | 09 May 2022 |
| | | | | CN | 114430358 | A | 03 May 2022 |

Form PCT/ISA/210 (patent family annex) (July 2022)

**EP 4 580 133 A1**

**Patent documents cited in the description**

- CN 202211161260